# EUROPEAN PATENT SPECIFICATION

(11) **EP 1 215 471 B1**
(45) Date of publication and mention of the grant of the patent: **28.08.2013**
(21) Application number: 00127733.4
(22) Date of filing: 18.12.2000
(51) Int. Cl.: G01F 23/14

(54) **Liquid level sensing system**
Flüssigkeitsstandssensor
Détecteur de niveau de fluide

(43) Date of publication of application: 19.06.2002
(73) Proprietor: Sensile Technologies S.A., 1110 Morges (CH)
(72) Inventor: Romanowicz, Rafal, 01220 Divonne (FR)
(74) Representative: Reuteler, Raymond Werner

(56) References cited:
- US-A- 5 319 964
- US-A- 5 351 725

## Description

This invention relates to a system for measuring and communicating information on the level of fluid in a tank. The invention relates in particular to a system for measuring and communicating information on the level of fuel or water in a stationary supply tank, as found in homes, apartment blocks and commercial buildings.

The measurement of liquid levels in stationary supply tanks with water or fuel is very often done by simply looking into the tank or by inserting a dipstick through an inspection hole at the top of the tank. Certain tanks may be provided with fluid level indicators, such as a floater in a transparent tube or other conventional level measuring means. These measurements are done by a human operator, for example the heating oil supplier, inspecting the tank at chosen intervals. This measurement process is relatively costly considering the travel to the site, and unreliable since the operator may not inspect at sufficiently short intervals.

A liquid level sensing system is known from US-A-5 319 964.

An object of this invention is to provide a fluid level sensing system that enables fluid level measurement to be effected without on-site inspection in a cost-effective and reliable manner.

It is advantageous to provide a fluid level sensing system that is easy to install and that requires little maintenance.

Objects of this invention have been achieved by providing a fluid level sensing system according to claim 1.

Disclosed herein is a liquid level sensing system for measuring the level of a liquid such as diesel, petrol or water according to claim 1.

The signal processing and communications unit comprises a wireless communications data modem for communication via a mobile phone network to the web server. The unit further comprises a controller for commanding, at intervals, measurement of the liquid level and transmission of data concerning unit identification and measured level via the wireless communications modem to the server. This enables energy use to be minimised such that an autonomous power supply may be provided to power the system, which in turn simplifies installation of the system.

Energy management by the controller could be further optimised by programming varying measurement and transmission intervals, or by receiving information thereon from the server, as a function of the liquid level or rate of liquid consumption.

The pressure sensor is advantageously inserted in the tank through its inspection conduit, commonly used for inserting a dipstick, whereby an adapter portion is mounted between the top of the conduit and its cap, the adapter portion being provided with a passage for passing the sensor cable sealingly therethrough.

The pressure sensor may be provided with a profiled base, for example of U-shaped extruded aluminium, in which a pressure cell and an electronic signal processing circuit connected to the sensor cable is received and covered by a protective casting material. The sensor could also be provided in an over-moulded casting without base. Only a pressure membrane of the pressure cell remains exposed to direct contact with the liquid to be measured. A particularly robust sensor for dropping into a heating fuel tank for example, is thus provided.

Further objects and advantageous features of the invention will be apparent from the claims or the following description and drawings, in which:
Figure 1 is a schematic view of a fluid level sensing system according to the invention for use with a heating fuel tank of a building and communicating with a supplier and customer network;
Figure 2 is a view of a tank with a fluid level sensing system according to this invention;
Figure 3 is a view of a fluid level sensing system according to this invention;
Figure 4 is a block diagram illustrating the functional units of a fluid level sensing system according to this invention
Figure 5 is a perspective view of part of a pressure sensor of a fluid level sensing system according to this invention; and
Figure 6 is a plan view of the pressure sensor of figure 5.

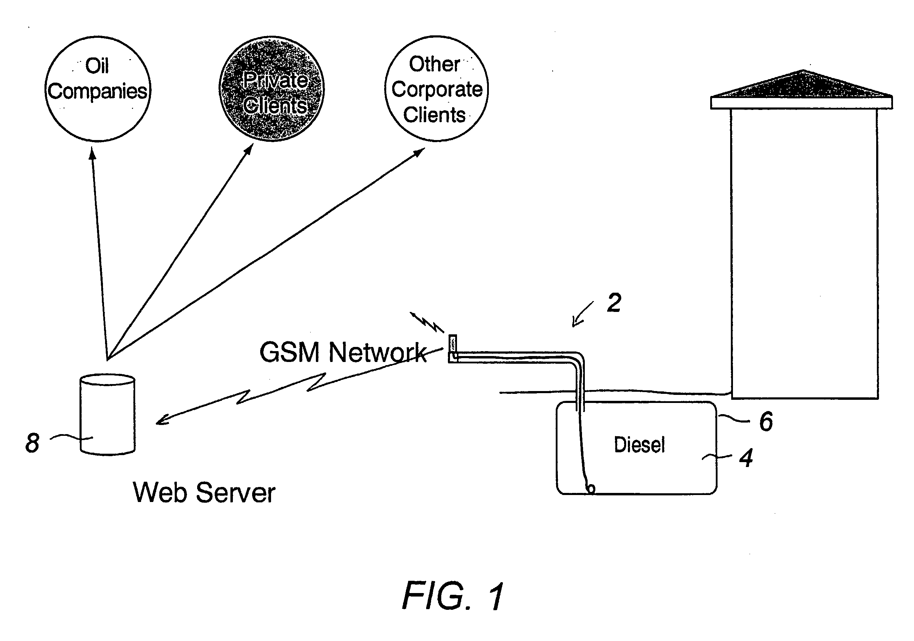

Referring to figure 1, a liquid level sensing system 2 for measuring the level of liquid 4 in a tank 6, communicates information on the liquid level via a telecommunications network to a server 8.

The telecommunications network is a wireless communications network used by mobile telephones. This reduces installation costs by eliminating the need to draw wires to the location of the tank and connect them to the system. Furthermore, it allows connectivity at low costs to tanks located in areas without fixed telephone lines.

The server 8, which has a database storing the information received from liquid level sensing systems, is connected to suppliers and consumers of the liquid, via the internet, to provide them with information concerning the volume of liquid in various tanks under their control. This enables users of the system to manage the supply of liquid to specific tanks when needed without on-site inspection.

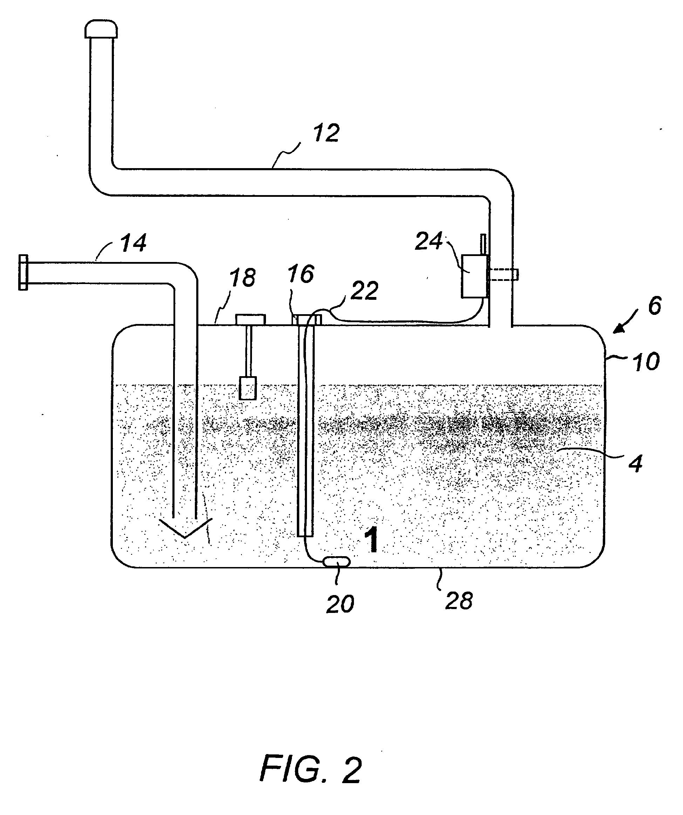

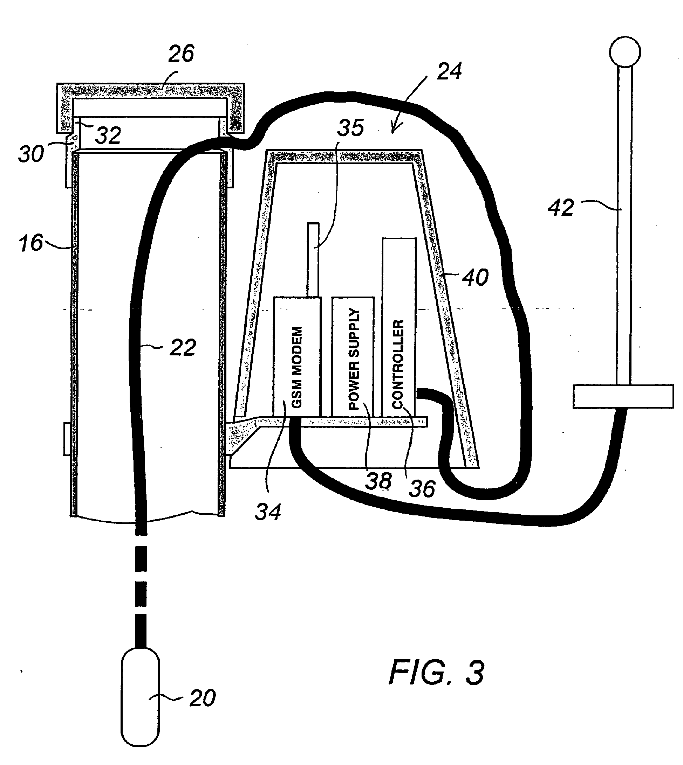

Referring to figures 2 and 3, a conventional tank 6, for example as installed in residential or industrial buildings for storing heating fuels such as diesel, comprises a container 10, an inlet pipe 12, an outlet pipe 14, and an inspection conduit 16 extending into the container through the top wall 18 thereof. Most conventional tanks comprise an inspection conduit closed by a threaded cap 26, that may be used to insert a dipstick to measure the liquid level, or to obtain a sample of the liquid, or simply to look into the tank.

The liquid level sensing system 2 is shown mounted to the tank and comprises a pressure sensor 20 connected via a cable 22 to a signal processing and communications unit 24. The pressure sensor 20 is inserted into the container through the inspection conduit 16 while feeding the cable 22 thereafter until it reaches the bottom 28 of the container, which is verified when the cable goes slack. The sensor may be provided with a weight to give a better feel of when the sensor hits the bottom.

An adapter portion 30, comprising a first threaded portion 32 for screwing on the cap 26 and a second threaded portion 34 for screwing the adapter portion to the top of the inspection conduit 16, is provided with a passage for the cable to pass therethrough. The adapter portion thus enables the sensor to be inserted into existing tanks without any modifications thereto, various adapters being made available to adapt to the different standards used.

The signal processing and communications unit 24, which is connected to the sensor cable 22, comprises a wireless communications modem 34 with an antenna 35, a controller 36 and a power supply 38, mounted in a protective housing 40 fixable to the tank , for example by being strapped to the inspection conduit 16. The modem may be connected to an external antenna 42 if signal reception is poor at the tank location.

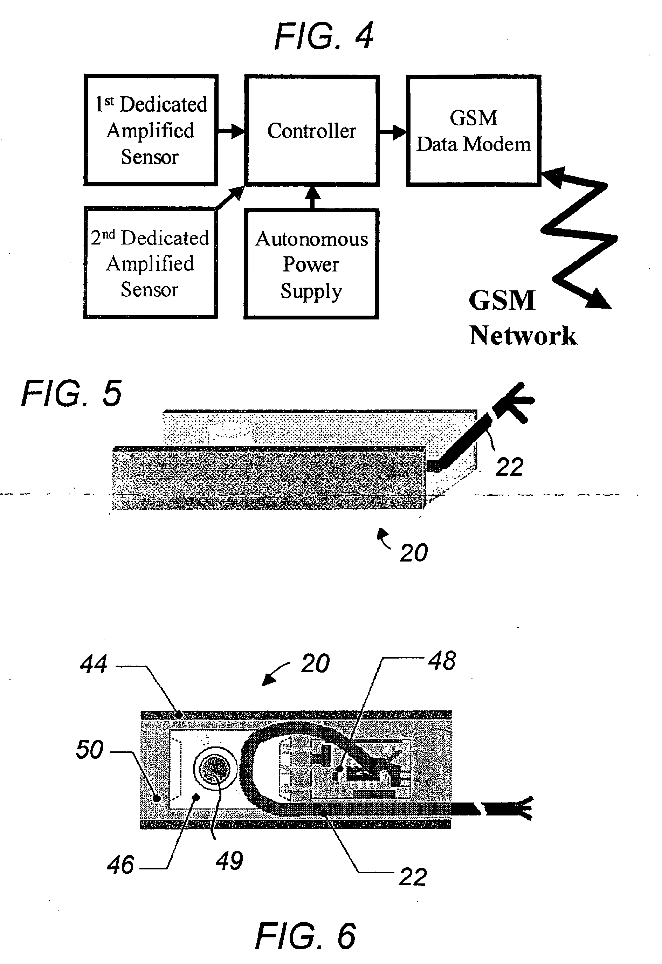

Referring to figures 3 and 4, the controller 36 of the unit 24 is connected to the modem 34, power supply 38 and sensor 20, and manages the transmission and reception of information. The controller has the important function of switching the system on for signal transmission and reception, and switching the system off again to save as energy. The controller in particular manages the switching on and off of the modem which is the device that consumes the most energy in the system. The intervals at which the system transmits liquid level measuring information may be regular, for example set daily or weekly, or dependent on consumption of the liquid, such intervals being longer when the tank is quite full and shorter as the level drops. The interval can be programmed not to exceed a certain lapse of time, irrespective of consumption rate, so that the server can detect a non operational system if no signal is received in the programmed interval. As the modem connects to the wireless telephone network, two-way connection is available so that the system can also be programmed at distance, for example from the server 8. The controller also manages power to the pressure sensor and provides information on the energy level of batteries of the power supply for transmission by the modem to the server 8, in particular to alert users when it is necessary to change batteries.

The main functions of the controller are to command measurement of liquid level, to command transmission of data (unit identification, measured level, low battery) via the wireless communications modem to the server 8, to respond to command information received from the server, to reprogram control functions (such as changing intervals between measurements), and to initialise or calibrate the unit after first use or battery change.

Data transmission from the liquid level sensing system is sent in the form of SMS (short message service) directly to the database server 8.

The batteries of the power supply may for example be long lasting lithium-ion batteries as commonly used in photo cameras, which typically have a shelf life of up to ten years. With the above-described energy management, a pair of 1500mAh lithium ion batteries could keep the system operational for up to five years with weekly transmission. The autonomy of such a liquid level sensing system is advantageous in that it simplifies instalment of the system on existing tanks by eliminating the need to provide an electrical connection. Moreover, an electrical supply cable may be inadvertently disconnected, thereby requiring an operator to inspect the tank.

Referring to figures 5 and 6, the pressure sensor 20 comprises a profiled base 44, for example of U-shaped extruded aluminium, in which a pressure cell 46 and an electronic signal processing circuit 48 connected to the sensor cable 22 is received. The pressure sensing cell ,excepting a pressure membrane 49 thereof, the signal processing circuit 48 and the cable connection end are covered by a protective casting to seal and protect the sensor from the liquid to be measured. The casting material is selected as a function of its resistance to the liquids in which it enters into contact, such as diesel, petrol, or water. Examples of casting materials are epoxy and silicon rubber.

The profiled base provides not only a low-cost and resistant protective shell, but also a form for casting the protective casting material 50 over the sensor cell and electronics.

The pressure cell 46 may be of a known type having a ceramic membrane 49. The advantage of using such a sensor is that the ceramic membrane is resistant to most liquids, and can therefore be simply immersed in the liquid to be measured. The sensor determines the absolute pressure of surrounding liquid and transmits that information to the database server 8. The level of liquid is computed by taking into account the density of the liquid and the atmospheric pressure at the tank location, which may be approximated from meteorological stations in the area. The atmospheric pressure data may be regularly obtained via the internet and regularly updated in the server 8.

## Claims

1. A liquid level sensing system for measuring the level of a liquid such as diesel, petrol or water contained in a stationary supply tank (6) installed in residential or industrial buildings, comprising a pressure sensor (20) adapted to be immersed in the liquid (4) and dropped into the tank such that it lies on a bottom wall (28) of the tank, a signal processing and communications unit (24) comprising a protective housing (40) fixable to the tank, an autonomous power supply (38), a wireless communications data modem (34) for communication in the form of Short Message Service (SMS) via a mobile phone network directly to a database server (8) accessible by suppliers and consumers via the internet, and a controller (36) for commanding at intervals measurement of liquid level and transmission of data concerning unit identification and measured level via the wireless communications modem to the server (8), said power supply (38), modem (34) and controller (36) being mounted in said protective housing (40), and a cable (22) interconnecting the pressure sensor to the signal processing and communications unit (24).

2. A liquid level sensing system according to claim 1 wherein the controller is able to program varying measurement and transmission intervals, or to receive information thereon from the server (8), as a function of the liquid level or rate of consumption.

3. A liquid level sensing system according to any one of the preceding claims further comprising an adapter portion (30) mountable between an inspection conduit (16) of the tank and a cap (26) thereof, the adapter portion provided with a passage for passing the sensor cable (22) therethrough.

4. A liquid level sensing system according to any one of the preceding claims wherein the pressure sensor comprises a profiled base (44), for example of U-shaped extruded aluminium, in which a pressure cell (46) and an electronic signal processing circuit (48) connected to the sensor cable (22) is received and covered by a protective casting material, excepting a pressure membrane (49) of the pressure cell.

## Patentansprüche

1. Flüssigkeitsfüllstandmesssystem zum Messen des Füllstandes einer Flüssigkeit, wie beispielsweise Diesel, Benzin oder Wasser die in einem stationären Versorgungstank (6) enthalten ist, der in Wohn- und Industriegebäuden installiert ist, umfassend einen Drucksensor (20), der so ausgelegt ist, dass er in die Flüssigkeit (4) getaucht und in den Tank fallen gelassen wird, derart dass er auf einer Bodenwand (28) des Tanks liegt, eine Signalverarbeitungs- und -Übertragungseinheit (24), die ein Schutzgehäuse (40) umfasst, das am Tank befestigt werden kann, eine unabhängige Leistungsversorgung (38), ein drahtloses Kommunikations-Datenmodem (34) zur direkten Kommunikation in der Form eines Kurnachrichtendienstes (SMS) über ein Mobilfunknetz mit einem Datenbankserver (8), auf den Versorger und Verbraucher über das Internet zugreifen können, und eine Steuerung (36) zum Befehlen in Intervallen von Messung des Flüssigkeitsfüllstands und Übertragung von Daten in Bezug auf Einheitenkennung und gemessenen Füllstand über das drahtlose Kommunikationsmodem an den Server (8), wobei die Leistungsversorgung (38), das Modem (34) und die Steuerung (36) im Schutzgehäuse (40) montiert sind, und ein Kabel (22) den Drucksensor mit der Signalverarbeitungs- und -Übertragungseinheit (24) verbindet.

2. Flüssigkeitsfüllstandmesssystem nach Anspruch 1, wobei die Steuerung imstande ist, in Abhängigkeit vom Flüssigkeitsfüllstand oder der Verbrauchsrate veränderliche Messungs- und Übertragungsintervalle zu programmieren oder Informationen darüber vom Server (8) zu empfangen.

3. Flüssigkeitsfüllstandmesssystem nach einem der vorhergehenden Ansprüche, ferner umfassend einen Adapterabschnitt (30), der zwischen einem Prüfkanal (16) des Tanks und einer Kappe (26) davon montierbar ist, wobei der Adapterabschnitt mit einem Durchgang zum Durchführen des Sensorkabels (22) dadurch versehen ist.

4. Flüssigkeitsfüllstandmesssystem nach einem der vorhergehenden Ansprüche, wobei der Drucksensor eine profilierte Basis (44), zum Beispiel aus U-förmigem, extrudiertem Aluminium, umfasst, in welcher eine Druckzelle (46) und eine elektronische Signalverarbeitungsschaltung (48) verbunden mit dem Sensorkabel (22) aufgenommen und mit Ausnahme einer Druckmembran (49) der Druckzelle durch ein schützendes Gussmaterial abgedeckt sind.

## Revendications

1. Système de détection de niveau de liquide pour mesurer le niveau d'un liquide tel que du gazole, de l'essence ou de l'eau contenu dans une cuve d'alimentation fixe (6) installée dans des bâtiments résidentiels ou industriels, comprenant un capteur de pression (20) conçu pour être immergé dans le liquide (4) et déposé dans la cuve de sorte qu'il se trouve sur une paroi de fond (28) de la cuve, une unité de traitement de signal et de communication (24) comprenant un boîtier de protection (40) pouvant être fixé à la cuve, une alimentation autonome (38), un modem de données de communication sans fil (34) pour une communication sous la forme de SMS (Short Message Service) par l'intermédiaire d'un réseau téléphonique mobile directement vers un serveur de base de données (8) accessible par des fournisseurs et des consommateurs par l'intermédiaire d'Internet, et un contrôleur (36) pour commander à intervalles la mesure du niveau de liquide et la transmission de données concernant une identification d'unité et un niveau mesuré par l'intermédiaire du modem de communication sans fil vers le serveur (8), lesdits alimentation (38), modem (34) et contrôleur (36) étant montés dans ledit boîtier de protection (40), et un câble (22) interconnectant le capteur de pression et l'unité de traitement de signal et de communication (24).

2. Système de détection de niveau de liquide selon la revendication 1, dans lequel le contrôleur est capable de programmer des intervalles de mesure et de transmission variables, ou de recevoir des informations à ce sujet du serveur (8), en fonction du niveau de liquide ou d'un taux de consommation.

3. Système de détection de niveau de liquide selon l'une quelconque des revendications précédentes, comprenant en outre une partie formant adaptateur (30) pouvant être montée entre un conduit d'inspection (16) de la cuve et un couvercle (26) de celle-ci, la partie formant adaptateur étant pourvue d'un passage pour le passage du câble de capteur (22) à travers celle-ci.

4. Système de détection de niveau de liquide selon l'une quelconque des revendications précédentes, dans lequel le capteur de pression comprend une base profilée (44), par exemple en aluminium extrudé en forme de U, dans laquelle une cellule de pression (46) et un circuit de traitement de signal électronique (48) connectés au câble de capteur (22) sont reçus et couverts d'un matériau de coulée de protection, à l'exception d'une membrane de pressurisation (49) de la cellule de pression.
